(19) Europäisches Patentamt
European Patent Office
Office européen des brevets

(11) EP 2 083 289 A1

(12) **EUROPEAN PATENT APPLICATION**
published in accordance with Art. 153(4) EPC

(43) Date of publication:
**29.07.2009 Bulletin 2009/31**

(21) Application number: **08721246.0**

(22) Date of filing: **04.03.2008**

(51) Int Cl.:
***G02B 5/20*** *(2006.01)* ***C09B 67/20*** *(2006.01)*
***G02B 5/22*** *(2006.01)*

(86) International application number:
**PCT/JP2008/053826**

(87) International publication number:
**WO 2008/126511 (23.10.2008 Gazette 2008/43)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **12.03.2007 JP 2007061654**
**04.09.2007 JP 2007228847**

(71) Applicant: **DIC Corporation**
**Tokyo 174-8520 (JP)**

(72) Inventors:
- **KAWAHARADA, Yukihiko**
  **Sakura-shi**
  **Chiba 285-8668 (JP)**
- **ISHIMORI, Motokazu**
  **Sakura-shi**
  **Chiba 285-8668 (JP)**
- **FUNAKURA, Seiji**
  **Sakura-shi**
  **Chiba 285-8668 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **PIGMENT COMPOSITION FOR COLOR FILTER**

(57) The present invention relates to a pigment composition or pigment dispersion suitable for producing a blue pixel portion of a color filter used in a liquid crystal display device, and also relates to a color filter.

An object of the present invention is to obtain a color filter having a blue pixel portion capable of achieving a liquid crystal display device, which has a high contrast for making the images on the display screen even sharper and has a high brightness for making the display screen even brighter, and to provide a pigment composition or pigment dispersion for obtaining the color filter.

The object can be achieved by the pigment composition or pigment dispersion for color filters **characterized by** containing a copper phthalocyanine sulfamoyl compound substituted with a sulfamoyl group having a specific polyalkylene oxide group, and a blue organic pigment.

According to the present invention, it is possible to provide a color filter having a blue pixel portion capable of achieving a liquid crystal display device that exhibits high contrast and high brightness.

EP 2 083 289 A1

## Description

### TECHNICAL FIELD

The present invention relates to a pigment composition or pigment dispersion suitable for producing a blue pixel portion of a color filter used in a liquid crystal display device, and a color filter using the pigment composition or the pigment dispersion for the blue pixel portion thereof.

### BACKGROUND ART

The color filters in liquid crystal display devices have a red pixel portion (R), a green pixel portion (G), and a blue pixel portion (B). All of these pixel portions have a structure in which a thin film of a synthetic resin where an organic pigment is dispersed is provided on a substrate, and red, green, and blue organic pigments are used as the organic pigments.

Among these pixel portions, an ε type copper phthalocyanine pigment (C. I. Pigment Blue 15:6) is generally used as a blue organic pigment for forming the blue pixel portion, and, if necessary, a small amount of dioxazine violet pigment (C. I. Pigment Violet 23) serving as a violet organic pigment is used concomitantly for toning.

The organic pigments used for producing color filters are required to provide properties completely different from those required in the conventional applications thereof. Specific examples of the required properties include a high contrast for making the images on the display screen of a liquid crystal display device become even sharper, and, in a similar manner, a high brightness for making the display screen become even brighter. In order to meet such requirements, powdered organic pigments that are finely ground so that their average primary particle size is equal to or less than 100 nm are used in many cases. However, there were still problems to be solved with the color resist inks prepared by using the finely ground organic pigments in terms of flow characteristics and light transmittance. For example, when the organic pigments are applied to the ink used in the color filters for liquid crystal display devices, there were still unsolved problems, such as the occurrence of nonuniform coating of ink on a glass substrate during the spin coating due to the decline of Newtonian flow characteristics of ink and the like, or unsatisfactory brightness and contrast of the color filters after the formation of pixels due to the low light transmittance.

Patent Document 1 discloses a blue pigment dispersion having an acidic derivative of an organic pigment and a cationic comb graft polymer as its essential components. The document reports its fine dispersion and high Newtonian flow characteristics. However, particles of the blue pigment obtained by the method disclosed in this document had an average particle size of about 100 nm, which was still somewhat large. Moreover, the viscosity ratio, that is, (viscosity at 6 rpm) / (viscosity at 60 rpm) which indicated Newtonian flow characteristics was about 2.2, which showed that the effects of non-Newtonian flow characteristics remained strong. In other words, the properties of this blue pigment did not achieve the desired level.

In Patent Document 2, a polyoxyalkylene-modified phthalocyanine-based colorant is reported to be useful as a colorant for a thermosetting resin and polyolefin-based material. However, the document does not describe the application of the colorant to color filters at all.

[Patent Document 1] Japanese Unexamined Patent Application, First Publication No. 2006-052410
[Patent Document 2] Japanese Unexamined Patent Application, First Publication No. Hei 3-149266

### DISCLOSURE OF INVENTION

### PROBLEMS TO BE SOLVED BY THE INVENTION

An object of the present invention is to provide a color filter having a blue pixel portion capable of achieving a liquid crystal display device, which has a high contrast for making the images on the display screen become even sharper and has a high brightness for making the images on the display screen become even brighter, and to provide a pigment composition or pigment dispersion for obtaining the color filter. Moreover, the present invention also has an object to provide a pigment dispersion for color filters which is capable of maintaining high voltage retention.

### MEANS FOR SOLVING THE PROBLEMS

As a result of intensive studies on the pigment compositions or pigment dispersions that can be suitably used for color filters, the present inventors discovered that the above problems can be solved by using a specific copper phthalocyanine sulfamoyl compound and a blue organic pigment as additives.

That is, the present invention provides a pigment composition or pigment dispersion for color filters characterized by containing a copper phthalocyanine sulfamoyl compound represented by general formula (1)

[Chemical Formula 1]

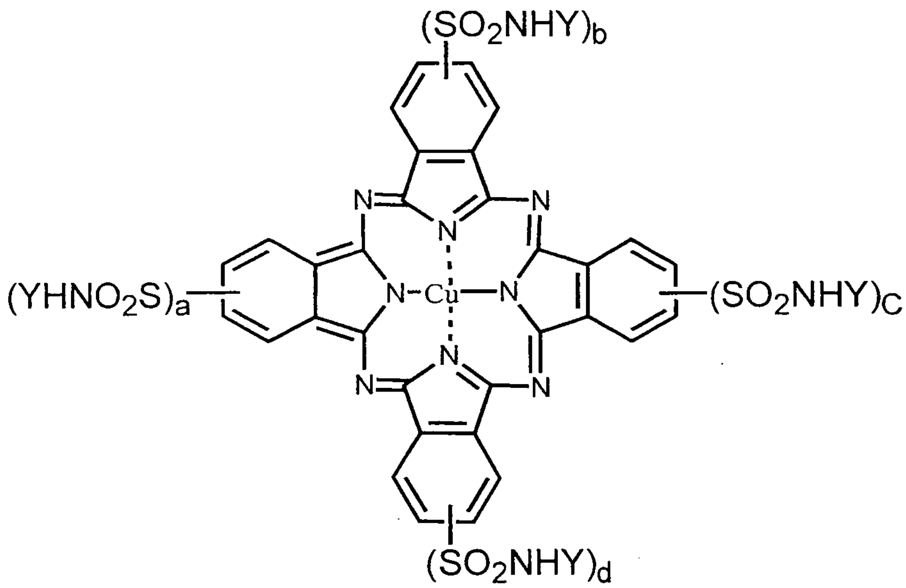

(1)

wherein Y is a moiety represented by general formula (2)

[Chemical Formula 2]

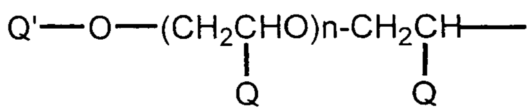

(2)

(wherein n represents an integer of 4 to 100; each Q independently represents a hydrogen atom or a methyl group; and Q' represents a non-cyclic hydrocarbon group of 1 to 30 carbon atoms), a, b, c, and d each independently represents an integer of 0 to 2, although at least one of them is 1; and a blue organic pigment, and

a color filter using the pigment composition or the pigment dispersion for color filters in its blue pixel portion.

Moreover, a pigment dispersion for color filters which is capable of maintaining high voltage retention of the color filters is provided by making the amount of a specific component contained in the pigment dispersion not greater than a certain value.

EFFECTS OF THE INVENTION

According to the present invention, it is possible to provide a color filter having a blue pixel portion capable of achieving a liquid crystal display device that has a high contrast for making the images on the display screen become even sharper and has a high brightness for making the images on the display screen become even brighter, and to provide a pigment composition or pigment dispersion capable of achieving the color filter.

Moreover, the present invention can also provide a pigment dispersion for color filters which is capable of maintaining high voltage retention.

BEST MODE FOR CARRYING OUT THE INVENTION

In the present invention, a pigment composition or pigment dispersion for color filters characterized by containing a copper phthalocyanine sulfamoyl compound represented by general formula (1)

[Chemical Formula 3]

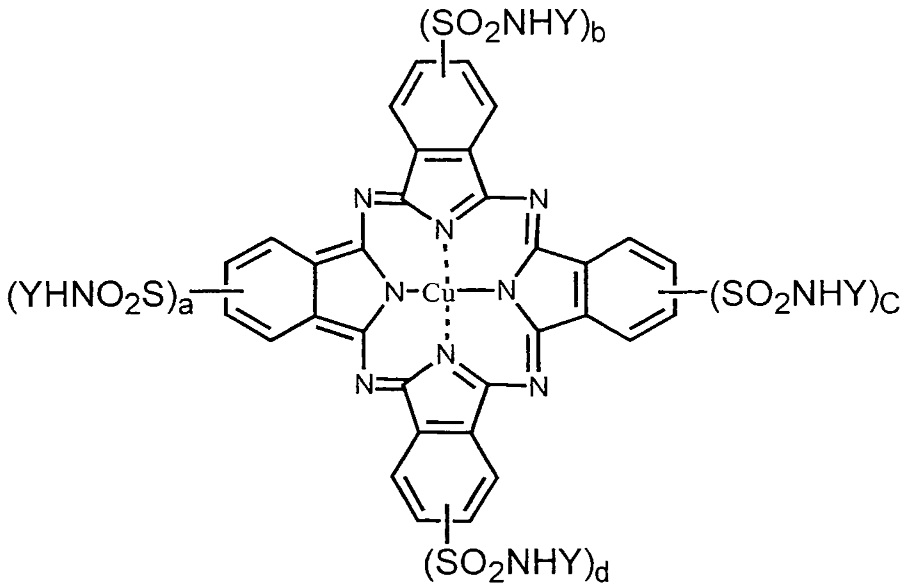

(1)

wherein Y is a moiety represented by general formula (2)

[Chemical Formula 4]

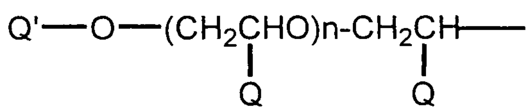

(2)

(wherein n represents an integer of 4 to 100; each Q independently represents a hydrogen atom or a methyl group; and Q' represents a non-cyclic hydrocarbon group of 1 to 30 carbon atoms), a, b, c, and d each independently represents an integer of 0 to 2, although at least one of them is 1; and a blue organic pigment, and a color filter using the pigment composition or the pigment dispersion for color filters in its blue pixel portion are provided.

As the copper phthalocyanine sulfamoyl compound of the present invention, that is, as the copper phthalocyanine sulfamoyl compound represented by general formula (1)

[Chemical Formula 5]

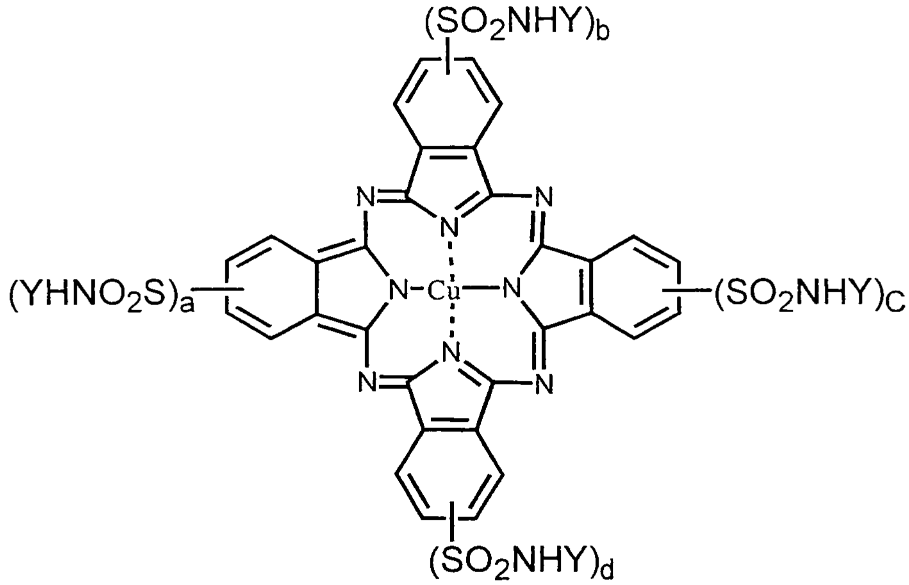

(1)

,

a compound in which the phthalocyanine ring is substituted with at least one sulfamoyl group can be exemplified. The number of sulfamoyl groups to be introduced to the phthalocyanine ring is not particularly limited as long as at least one sulfamoyl group is present per one phthalocyanine ring. However, the number of sulfamoyl groups is preferably 1 or 2 and more preferably 1. The position in the phthalocyanine ring to be substituted by a sulfamoyl group is not particularly limited.

Y in general formula (1) of the present invention represents a polyalkylene oxide moiety. Examples of Y include all kinds of polyalkylene oxides such as an ethylene oxide polymer and an ethylene oxide / propylene oxide copolymer, and it may either be a block (co)polymer or a random (co)polymer. Preferably, Y is an alkylene oxide copolymer having a moiety represented by general formula (2)

[Chemical Formula 6]

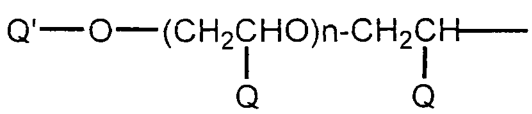

(2)

(wherein n is 4 to 100; each Q independently represents a hydrogen atom or a methyl group; and Q' is a non-cyclic hydrocarbon group of 1 to 30 carbon atoms), and it is desirable to optimize its hydrophilicity or lipophilicity depending on the type of solvent used in the pigment composition for color filters. Here, as a non-cyclic hydrocarbon group of 1 to 30 carbon atoms, Q' may either be a straight chain hydrocarbon group or a branched hydrocarbon group, and the hydrocarbon group may either be a saturated hydrocarbon group or an unsaturated hydrocarbon group. Examples of such non-cyclic hydrocarbon groups include the straight chain or branched saturated hydrocarbon groups such as a methyl group, an ethyl group, an n-propyl group, an isopropyl group, an n-butyl group, an isobutyl group, an n-pentyl group, an n-hexyl group, an n-octyl group, a 2-ethyl-hexyl group, an n-dodecyl group, a stearyl group, an n-tetracosyl group, and an n-triacontyl group.

In addition, the straight chain or branched unsaturated hydrocarbon groups may have a double bond or a triple bond in the hydrocarbon group, and examples of such straight chain or branched unsaturated hydrocarbon groups include a vinyl group, a propenyl group, an isopropenyl group, a butenyl group, a pentenyl group, an isoprene group, a hexenyl

group, a heptenyl group, an octenyl group, a decenyl group, a geranyl group, an ethynyl group, a 2-propynyl group, and a 2-penten-4-yl group.

The letter n that represents the number of repeating units, that is, the number of the polyalkylene oxide moiety, is preferably equal to or greater than 4 and equal to or less than 100, more preferably equal to or greater than 5 and equal to or less than 80, and even more preferably equal to or greater than 10 and equal to or less than 50. When the number of repeating units, n, is less than 4, the compatibility with a dispersion medium will be unsatisfactory. On the other hand, the dispersion stability tends to decline when n is greater than 100.

The copper phthalocyanine sulfamoyl compound used in the present invention and represented by general formula (1) can be produced by carefully combining some conventionally used methods, for example, by reacting copper phthalocyanine sulfonyl chloride with a polyether amine having an amine moiety at the terminal of its polyether backbone (hereinafter abbreviated as "polyether monoamine"). The copper phthalocyanine sulfonyl chloride used as a source material can be obtained by the reaction between copper phthalocyanine and chlorosulfonic acid and/or thionyl chloride. The polyether monoamine serving as another source material can be obtained by a conventionally known method. For example, polyether monoamines can be obtained by reductive amination of a hydroxyl group at the terminal of a polyether skeleton using a nickel/copper/chromium catalyst, or by first imidizing a hydroxyl group at the terminal of a polyether skeleton by the Mitsunobu reaction (reference: Synthesis, 1-28 (1981)) and then aminating the resultant by hydrazine reduction (reference: Chem. Commun., 2062-2063 (2003)). Polyether monoamines are also provided as commercially available products and examples thereof include JEFFAMINE M (product name) series provided from Huntsman Corporation, U.S.A.

Examples of the copper phthalocyanine sulfamoyl compound used in the present invention and represented by general formula (1) include a compound represented by the following general formula (3), although the copper phthalocyanine sulfamoyl compound is not limited thereto.

[Chemical Formula 7]

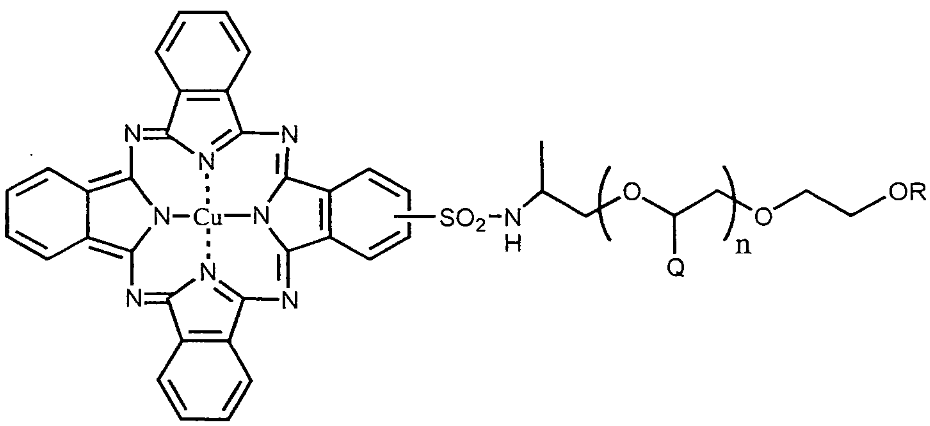

(3)

wherein Q represents a hydrogen atom or a methyl group; and n is 4 to 100.

As the blue organic pigment used in the present invention, a phthalocyanine pigment or an indanthrone blue pigment can be used. When considering the application for the blue pixel portion of a color filter, it is more preferable to use an ε type phthalocyanine pigment in view of the resulting hue.

In addition, it is also possible to use a violet pigment concomitantly in order to add a reddish tinge. Examples of the violet pigment include dioxazine violet pigments such as C. I. Pigment Violet 23 and C. I. Pigment Violet 37.

In the pigment composition of the present invention, the mass ratio between the copper phthalocyanine sulfamoyl compound represented by general formula (1) and the blue organic pigment, that is, (copper phthalocyanine sulfamoyl compound) / (blue organic pigment) is not particularly limited. However, examples of the ratio include 5/95 to 95/5, and it is preferably 5/95 to 70/30, more preferably 10/90 to 60/40, and even more preferably 20/80 to 50/50. When the amount of the copper phthalocyanine sulfamoyl compound represented by general formula (1) is less than 5 parts by mass, a good contrast cannot be expected. On the other hand, the amount exceeding 70 parts by mass is not preferable since it will adversely affect the resulting hue considerably.

The term "pigment composition" used in the present invention refers to a powdery or pasty mixture containing the copper phthalocyanine sulfamoyl compound represented by general formula (1) and a blue organic pigment, as well as a pigment for toning if necessary. Examples of the pigment for toning include those commonly used as a pigment for toning, such

as the aforementioned C. I. Pigment Violet 23 and C. I. Pigment Violet 37 serving as violet pigments and C. I. Pigment 122 serving as a red pigment, although the pigment for toning is not limited to these pigments.
In addition, the term "pigment dispersion" used in the present invention refers to a mixed liquid in which a pigment composition is dispersed in an organic solvent.

The pigment composition of the present invention has high dispersibility and high dispersion stability in a liquid medium, and thus the pigment particles in the blue pigment dispersion described later are dispersed in the form of fine particles and the dispersion has a low viscosity and its Newtonian flow characteristics are also stable and remain high. Accordingly, when the blue pixel portion of color filters is produced with this composition/dispersion, a uniform coating film is formed and the color filters having high brightness, high contrast, and high light transmittance can be achieved.
Examples of the organic solvent to be used include aromatic solvents such as toluene, xylene, and methoxybenzene; acetic acid ester-based solvents such as ethyl acetate, butyl acetate, propylene glycol monomethyl ether acetate, propylene glycol monoethyl ether acetate, diethylene glycol methyl ether acetate, diethylene glycol ethyl ether acetate, diethylene glycol propyl ether acetate, and diethylene glycol butyl ether acetate; propionate-based solvents such as ethoxyethyl propionate; alcohol-based solvents such as methanol and ethanol; ether-based solvents such as butyl cellosolve, propylene glycol monomethyl ether, diethylene glycol ethyl ether, and diethylene glycol dimethyl ether; ketone-based solvents such as methyl ethyl ketone, methyl isobutyl ketone, and cyclohexanone; aliphatic hydrocarbon-based solvents such as hexane; nitrogen compound-based solvents such as N,N-dimethylformamide, γ-butyrolactam, N-methyl-2-pyrrolidone, aniline, and pyridine; lactone-based solvents such as γ-butyrolactone; and carbamic acid esters such as a mixture of methyl carbamate and ethyl carbamate (48 : 52).

The intensity of transmitted light is first measured when two polarizing plates are arranged so that their polarization directions are parallel to each other while sandwiching an object to be measured therebetween. The intensity of transmitted light is then measured when two polarizing plates are arranged so that their polarization directions are perpendicular to each other while sandwiching an object to be measured therebetween. The term "contrast" used herein is one that is calculated by dividing the light intensity measured first with the light intensity measured afterwards.

In addition, it is also possible to use the pigment composition of the present invention as the sole blue pigment for the blue pixel portion of color filters. However, when necessary, it is also effective to add a pigment derivative in order to improve the viscosity characteristics of the dispersion and ink for color filters and to improve their dispersion stability. Any conventionally known pigment derivatives can be used as such pigment derivatives, although a pigment derivative represented by the following general formula (4) is preferable.

[Chemical Formula 8] P-(A-Y)n (4)

wherein P represents phthalocyanine, indanthrone blue, or a dioxazine violet residue; A represents a direct bond or a divalent linking group; Y represents a primary to tertiary amino group or a heterocyclic residue; and n represents 1 to 4. Specifically, the pigment derivative is preferably a phthalimidemethyl derivative, a sulfonic acid derivative, an N-(dialkylamino)methyl derivative, or an N-(dialkylaminoalkyl)sulfonic acid amide derivative, in which P is phthalocyanine, indanthrone blue or a dioxazine violet. It is also preferable to use these pigment derivatives by adding amines such as a primary amine, a secondary amine, a tertiary amine, a quaternary amine, and ethylenediamine thereto.

The pigment composition of the present invention can be used for the formation of a blue pixel portion of color filters by a known method. A pigment dispersion method is suitable when using this pigment composition to produce a blue pixel portion of color filters.

A photolithography method is a typical pigment dispersion method. Specifically, this is a method in which a photocurable composition described later is first coated on a transparent substrate surface, where a black matrix is provided, and then dried by heating (prebaked), followed by a pattern exposure process conducted by irradiating ultraviolet rays thereon via a photomask to cure the photocurable composition coated at the place that corresponds to the pixel portion, and thereafter the unexposed portions are developed with a developing solution and then the non-pixel portions are removed so as to fix the pixel portion on the transparent substrate. In this method, the pixel portion composed of a cured and colored film that is made of the photocurable composition is formed on the transparent substrate.

By preparing the photocurable composition described later for each red, green, and blue color and repeating the aforementioned operations, it is possible to produce a color filter having colored pixel portions of red, green, and blue at predetermined positions. A blue pixel portion can be formed from the pigment composition of the present invention. Note that conventionally known red pigments and green pigments can be used in order to prepare photocurable compositions for forming red and green pixel portions.

Examples of the pigments for forming a red pixel portion include C. I. Pigment Red 177, C. I. Pigment Red 209, and C. I. Pigment Red 254, and examples of the pigments for forming a green pixel portion include C. I. Pigment Green 7, C. I. Pigment Green 10, C. I. Pigment Green 36, C. I. Pigment Green 47, and C. I. Pigment Green 58. It is also possible to use a yellow pigment concomitantly for forming these red and green pixel portions. Then, if necessary, the entire color

filter may be subjected to a heat treatment (postbaking) in order to thermally cure an unreacted photocurable compound.

Examples of the method described later for coating the photocurable composition on a transparent substrate such as glass include a spin coating method, a roll coating method, and an ink jet method.

Although the conditions for drying a coating film that is formed by coating a photocurable composition on a transparent substrate differ depending on the types and the amount of each component, the drying is usually carried out at 50 to 150˚C for about 1 to 15 minutes. In addition, it is preferable to use ultraviolet light or visible light of a wavelength range of 200 to 500 nm as the light used for photocuring a photocurable composition. Various light sources which emit light having this wavelength range can be used.

Examples of the developing methods include a puddle method, a dipping method, and a spray method. After the exposure and development of the photocurable composition, the transparent substrate where pixel portions of necessary colors are formed is washed with water and then dried. The color filters obtained in such a manner are then subjected to a heating treatment (postbaking) for a predetermined time at 100 to 280˚C using a heating device such as a hotplate and an oven in order to eliminate volatile components in the colored coating film as well as to thermally cure the unreacted photocurable compound remaining in the cured and colored coating film of the photocurable composition so as to complete the production of color filters.

The photocurable composition used for forming the blue pixel portion of color filters has the pigment composition of the present invention and a photocurable compound as its essential components and, if necessary, an organic solvent, a dispersant, and a thermoplastic resin are used concomitantly, and the photocurable composition can be prepared by mixing these components. When a colored resin film that forms the blue pixel portion is required to have resistance to the baking process and the like that is carried out in the actual production of color filters, it is absolutely essential to use not only a photocurable compound but also a thermoplastic resin at the same time when preparing the photocurable composition. When using a thermoplastic resin concomitantly, it is preferable to use an organic solvent that dissolves the resin.

As the method for producing the aforementioned photocurable composition, by using the pigment composition of the present invention and, if necessary, using an organic solvent and a dispersant concomitantly, it is typical to mix them by stirring/dispersing to first prepare a uniform pigment dispersion for forming the blue pixel portion of color filters, and thereafter adding a photocurable compound as well as, if necessary, a thermoplastic resin or a photopolymerization initiator thereto to form the photocurable composition.

Examples of the dispersants used in this process include DisperBYK130, DisperBYK161, DisperBYK162, DisperBYK163, and DisperBYK 170, all manufactured by BYK-Chemie GmbH, and EFKA46 and EFKA47 manufactured by EFKA Additives. In addition, it is also possible to use a leveling agent, a coupling agent, and various surfactants at the same time.

As the organic solvent, the polar solvents that are water-soluble such as a propionate-based solvent, an alcohol-based solvent, an ether-based solvent, a ketone-based solvent, a nitrogen compound-based solvent, and a lactone-based solvent are particularly preferable and specific examples thereof include the aforementioned organic solvents. In addition, when a water-soluble organic solvent is used, it is also possible to use water with the solvent.

Examples of the thermoplastic resin to be used for preparing the photocurable composition include a urethane-based resin, an acrylic resin, a polyamide-based resin, a polyimide-based resin, a styrene maleic acid-based resin, and a styrene maleic acid anhydride-based resin.

Examples of the photocurable compounds include difunctional monomers such as 1,6-hexanediol diacrylate, ethylene glycol diacrylate, neopentyl glycol diacrylate, triethylene glycol diacrylate, bis(acryloxyethoxy)bisphenol A, and 3-methylpentanediol diacrylate; polyfunctional monomers having a relatively small molecular weight such as trimethylol propane triacrylate, pentaerythritol triacrylate, tris(2-hydroxyethyl) isocyanate, dipentaerythritol hexacrylate, and dipentaerythritol pentacrylate; and polyfunctional monomers having a relatively large molecular weight such as polyester acrylate, polyurethane acrylate, and polyether acrylate.

Examples of the photopolymerization initiators include acetophenone, benzophenone, benzyldimethylketanol, benzoyl peroxide, 2-chlorothioxanthone, 1,3-bis(4'-azidobenzal)-2-propane, 1,3-bis(4-azidobenzal)-2-propane-2'-sulfonic acid, and 4,4'-diazidostilbene-2,2'-disulfonic acid.

The aforementioned pigment dispersion can be obtained by using the respective materials described earlier and mixing 300 to 1000 parts by mass of an organic solvent with respect to 100 parts by mass of the pigment composition produced by the method of the present invention, as well as 1 to 100 parts by mass of a dispersant, if necessary, by stirring/dispersing so as to achieve a uniform dispersion. Subsequently, a total of 3 to 20 parts by mass of a combination of a thermoplastic resin and a photocurable compound, with respect to 1 part by mass of the pigment composition of the present invention, is added to this pigment dispersion. The photocurable composition for forming the blue pixel portion of color filters can be obtained by, if necessary, further adding 0.05 to 3 parts by mass of a photopolymerization initiator with respect to 1 part by mass of the photocurable compound as well as an organic solvent to the above mixture, and stirring/dispersing so as to achieve a uniform resultant.

As a developing solution, a conventionally known organic solvent or aqueous alkaline solution can be used.

In particular, when the aforementioned photocurable composition contains a thermoplastic resin or a photocurable compound and at least one of them has an acid value and exhibits alkali solubility, the washing with an aqueous alkaline solution is effective in forming the blue pixel portion of color filters.

Although the method for producing the blue pixel portion of color filters by a photolithography method among other pigment dispersion methods is described here in detail, the blue pixel portion of color filters which is prepared by using the pigment composition produced by the method of the present invention can also be produced by other methods such as an electrodeposition method, a transfer process, micelle electrolysis, a photovoltaic electrodeposition (PVED) method, an ink jet method, a reverse printing method, and a thermal curing method.

A color filter can be obtained by the following methods. By using a photocurable composition of each color obtained by the use of a red pigment, a green pigment, and a pigment composition produced by the method of the present invention, a liquid crystal material is first filled in between a pair of transparent electrodes arranged in parallel, and the transparent electrodes are then divided into discontinuous minute segments. At the same time, one of colored pixel portions of a color filter selected from the red (R), green (G), and blue (B) pixel portions is provided alternately in a pattern for each minute segment on the transparent electrodes that is partitioned in a grid-like manner by a black matrix. Alternatively, a color filter can be obtained by first forming colored pixel portions of a color filter on a substrate and then providing transparent electrodes.

The color filters using the pigment dispersion obtained by the present invention are characterized by having a high voltage retention. It is preferable that the voltage retention be high, and, for example, a voltage retention of 95% or higher is preferable. When the color filters are applied to the liquid crystal display devices, decline in the voltage retention means the incorporation of impurities such as an ionic material in the liquid crystal layer. The impurities prevent the retention of the voltage applied to the liquid crystal layer for a certain time by moving inside the liquid crystal layer which may cause display flickers, and thus the incorporation of impurities is not preferable.

In order to maintain a high voltage retention, it is required that the total of alkali metal atoms and alkali earth metal atoms contained in the dispersion be equal to or less than 300 ppm by mass, and also the amine value of the dispersion be equal to or less than 0.40 mgKOH/g.

Examples of alkali metals include sodium and potassium and examples of alkali earth metals include magnesium and calcium. When the total of alkali metal atoms and alkali earth metal atoms contained in the composition is greater than 300 ppm by mass, it is not preferable since the voltage retention declines. Examples of the methods for measuring the alkali metal atoms and alkali earth metal atoms contained in the composition include a generally known inductively coupled plasma-atomic emission spectroscopy.

In addition, when the total of alkali metal atoms and alkali earth metal atoms is equal to or less than 300 ppm by mass, the contents of halogen atoms, such as chlorine, sulfur atoms originated from sulfates, or the like which may function as the counterions of the abovementioned metal atoms will also drop, and this drop in the content of these atoms can be verified by a known analytical method such as inductively coupled plasma-atomic emission spectroscopy.

Moreover, the amine value of the dispersion can be measured by a generally known method such as the method in accordance with the American Society for Testing and Materials (ASTM) D 2074. The amine value is preferably equal to or less than 0.40 mgKOH/g in order to maintain a high voltage retention. Amine values greater than 0.40 mgKOH/g will lead to the reduction in the voltage retention, and are thus not preferable.

The alkali metal atoms and alkali earth metal atoms contained in the pigment dispersion for color filters in the present invention are incorporated in the pigment dispersion for color filters since the inorganic salts, such as sodium carbonate used in the process for producing the copper phthalocyanine sulfamoyl compound represented by general formula (1), remain in the dispersion.

In addition, the amines are incorporated in the pigment dispersion for color filters since the amines used in the process for producing the copper phthalocyanine sulfamoyl compound represented by general formula (1) remain in the dispersion.

The alkali metal atoms and alkali earth metal atoms contained in the copper phthalocyanine sulfamoyl compound can be reduced by a known method such as washing by water through centrifugal separation or the liquid-liquid extraction process. The amines contained in the copper phthalocyanine sulfamoyl compound can be reduced by a known method such as centrifugal separation, liquid-liquid extraction, and adsorption treatment using an adsorbent.

The pigment dispersion for color filters of the present invention where a high voltage retention is maintained can be prepared by reducing the amount of alkali metal atoms, alkali earth metal atoms, and amines contained in the dispersion by the above methods.

The pigment composition used for the blue pixel portions of color filters which is produced by the method of the present invention is a blue pigment excellent in terms of sharpness, lightness, storage stability, and heat resistance, and having a reddish hue. Apart from the color filters, the pigment composition can also be applied to the colorings of various materials including a coating material, plastic (resin-molded product), a printing ink, rubber, leather, textile printing, a toner for electrostatic charge development, an ink for ink jet printing, and a thermal transfer ink.

EXAMPLES

The present invention will be described in detail below using Examples. However, the scope of the present invention is by no way limited by these Examples. Note that the terms "parts" and "%" used in Examples and Comparative Examples are based on the mass unless stated otherwise.

(Production Example 1)

692 parts of "Surfonamine B-200" (product name) manufactured by Huntsman Corporation, U.S.A. which was a primary amine-terminated poly(ethylene oxide/propylene oxide (= 5/95)) copolymer having a number average molecular weight of about 2,000 and serving as a polyether monoamine, 66 parts of sodium carbonate, and 150 parts of water were mixed, and 210 parts of copper phthalocyanine sulfonyl chloride (sulfonation degree = 1) were then added to the mixture and the reaction was conducted at 5˚C to room temperature for 6 hours. The obtained reaction mixture was heated to 90˚C under vacuum to remove water, and a copper phthalocyanine sulfamoyl compound (S1) was obtained as a result.

(Production Examples 2 to 16)

The copper phthalocyanine sulfamoyl compounds (S2) to (S16) were obtained in a similar manner to that of Production Example 1 except that the materials shown in Table 1 were combined for use to obtain the compounds. It should be noted that in Production Example 12, Unilube 20MT-2000B (product name) which was a monoalkyl polyether having a branched C24 hydrocarbon group and manufactured by NOF Corporation was converted to a polyether monoamine by the reductive amination reaction for use.

[Table 1]

| | Compound | $CuPc-SO_2Cl$ | | Polyether monoamine | | | |
|---|---|---|---|---|---|---|---|
| | | Sulfonation degree | Amount added | Non-cyclic hydrocarbon group | PO/EO | n | Amount added |
| Production Example 1 | (S1) | 1 | 210 parts | Methyl | 29/6 | 35 | 692 parts |
| Production Example 2 | (S2) | 3 | 210 parts | Methyl | 29/6 | 35 | 1,800 parts |
| Production Example 3 | (S3) | 1 | 210 parts | Methyl | 38/12 | 50 | 1,800 parts |
| Production Example 4 | (S4) | 1 | 210 parts | Methyl | 9/1 | 10 | 500 parts |
| Production Example 5 | (S5) | 1 | 210 parts | Methyl | 12/48 | 60 | 1,800 parts |
| Production Example 6 | (S6) | 1 | 210 parts | Methyl | 85/10 | 95 | 5,000 parts |
| Production Example 7 | (S7) | 1 | 210 parts | Methyl | 4/1 | 5 | 400 parts |
| Production Example 8 | (S8) | 1 | 210 parts | n-butyl | 33/0 | 33 | 2,500 parts |
| Production Example 9 | (S9) | 1 | 210 parts | n-octyl | 33/0 | 33 | 2,500 parts |
| Production Example 10 | (S10) | 1 | 210 parts | Stearyl | 34/3 | 37 | 2,200 parts |
| Production Example 11 | (S11) | 1 | 210 parts | 2-ethyl hexyl | 35/0 | 35 | 2,000 parts |

(continued)

| | Compound | CuPc-$SO_2Cl$ | | Polyether monoamine | | | |
|---|---|---|---|---|---|---|---|
| | | Sulfonation degree | Amount added | Non-cyclic hydrocarbon group | PO/EO | n | Amount added |
| Production Example 12 | (S12) | 1 | 210 parts | Branched C24 | 20/10 | 30 | 2,000 parts |
| Production Example 13 | (S13) | 1 | 210 parts | n-triacontyl | 35/5 | 40 | 3,000 parts |
| Production Example 14 | (S14) | 1 | 210 parts | Isopropenyl | 40/5 | 45 | 5,000 parts |
| Production Example 15 | (S15) | 1 | 210 parts | Geranyl | 30/5 | 35 | 3,000 parts |
| Production Example 16 | (S16) | 1 | 210 parts | Ethynyl | 30/5 | 35 | 2,000 parts |

<Evaluation of physical properties>

Color filters were produced by the following method and the evaluation results of these filters are shown in Table 2.

[Production method of color filter for test]

(Example 1)

3.0 parts of the copper phthalocyanine sulfamoyl compound (S1) obtained in Production Example 1 and represented by general formula (1), 10.0 parts of ε type copper phthalocyanine pigment (Pigment Blue 15:6 product having an average primary particle size of 50 nm), 0.20 parts of Fastogen Super Violet RVS (product name) which was Pigment Violet 23 manufactured by DIC Corporation, and 49 parts of propylene glycol monomethyl ether acetate were mixed, and SEPR beads of 0.5 mm ϕ were then added to the mixture. The resulting mixture was dispersed for 2 hours using a paint conditioner (manufactured by Toyo Seiki Seisaku-sho, Ltd.) to obtain a blue pigment dispersion. 75.00 parts of this obtained blue pigment dispersion, 5.50 parts of polyester acrylate resin (Aronix M7100 manufactured by TOAGOSEI Co., Ltd.), 5.00 parts of dipentaerythritol hexacrylate (KAYARAD DPHA manufactured by Nippon Kayaku Co., Ltd.), 1.00 part of benzophenone (KAYACURE BP-100 manufactured by Nippon Kayaku Co., Ltd.), and 13.5 parts of UCAR Ester EEP were stirred to mix using a dispersion stirrer. The resultant was then filtered using a filter having a pore size of 1.0 μm to obtain a color resist. The obtained color resist was coated on a glass plate having a thickness of 1 mm using a spin coater so that the resulting dried film will have a thickness of 1 μm. The coated color resist was then predried at 60°C for 5 minutes to form a coating film. Then the pattern was formed thereon by exposing the coating film to ultraviolet radiation via a photomask. Unexposed portions were then washed, first with a 0.5% aqueous solution of sodium carbonate and then with pure water. The obtained coating film was then cured by a heat treatment conducted at 230°C for 15 minutes to form a blue pixel portion of a color filter.

(Examples 2 to 16)

Blue pixel portions of color filters were produced in a similar manner to that of Example 1 except that the copper phthalocyanine sulfamoyl compounds (S2) to (S16) obtained in the abovementioned Production Examples were respectively used instead of the phthalocyanine sulfamoyl compound (S1).

(Comparative Example 1)

A blue pixel portion of a color filter was produced in a similar manner to that of Example 1 except that no copper phthalocyanine sulfamoyl compound was used.

(Comparative Example 2)

A blue pixel portion of a color filter was produced in a similar manner to that of Example 1 except that 7.5 parts of Ajisper PB-814 (product name) manufactured by Ajinomoto Fine-Techno Co., Inc. and having a nonvolatile content of 40%, 9.5 parts of ε type copper phthalocyanine pigment (Pigment Blue 15:6 product having an average primary particle size of 50 nm), and 0.5 parts of copper phthalocyanine monosulfonic acid (a derivative of phthalocyanine) were used instead of 3.0 parts of the copper phthalocyanine sulfamoyl compound (S1) and 10.0 parts of ε type copper phthalocyanine pigment (Pigment Blue 15:6 product having an average primary particle size of 50 nm).

(Evaluation of Newtonian flow characteristics of blue pigment dispersion)

The viscosity ratio γ, that is, (viscosity at 6 rpm) / (viscosity at 60 rpm) of the blue pigment dispersion at 25˚C was measured using a Brookfield viscometer. When the viscosity ratio γ was less than 1.8, it was determined that the state was Newtonian flow characteristics dominant (○). When the viscosity ratio γ was equal to or greater than 1.8, it was determined that the state was non Newtonian flow characteristics dominant (×).

(Light transmittance)

Using a spectrophotometer specified by JIS Z 8722 (spectrophotometer described earlier), the transmission spectra for the obtained blue pixel portions of color filters in the entire range of visible light were respectively measured, and then the wavelength at which the maximum transmittance is exhibited (λmax), and the transmittance at λmax (Tmax) were measured.

(Brightness)

Using a microscope MX-50 manufactured by Olympus Corporation and a spectrophotometer MCPD-3000 manufactured by Otuska Electronics Co., Ltd., x and y values of the chromaticity coordinates were calculated by colorimetry using an F10 light source, and the Y values in the CIE chromaticity system indicating brightness were measured using both x and y values of the chromaticity coordinates. Evaluations herein were made so that large Y values (brightness) corresponded to high visual brightness.

(Contrast)

Brightness was measured by placing the blue pixel portion of a color filter between two polarizing plates and setting a light source on one plate and a CCD camera on the other. Intensities of transmitted light were measured when two polarization axes were parallel to each other and when two polarization axes were perpendicular to each other, and the contrast was calculated from the ratio of two values on brightness (intensity of transmitted light) obtained by the measurements.

(Smoothness of coating film)

Surface roughness Ra was measured using an atomic force microscope (NanoScope IIIa). When the surface roughness value Ra was less than 2.0 nm, it was determined that the coating film smoothness was excellent (○). When the surface roughness value Ra was equal to or greater than 2.0 nm, it was determined that the coating film smoothness was poor (×).

(Heat resistance)

The blue pixel portions of color filters were heated at 250˚C for 1 hour and the heat resistance thereof was assessed by evaluating the differences in the brightness (Y values) before and after the heating process. Those having ΔY of less than 0.5, which was the difference in the brightness due to this process, were evaluated as having excellent heat resistance (○), and those having ΔY equal to or greater than 0.5 were evaluated as being poor(×).
[Table 2]

| | Example 1 | Example 2 | Example 3 | Example 4 | Example 5 |
|---|---|---|---|---|---|
| Copper phthalocyanine sulfamoyl compound | (S1) | (S2) | (S3) | (S4) | (S5) |
| Blue pigment dispersion | (B1) | (B2) | (B3) | (B4) | (B5) |
| Newtonian flow characteristics γ<br>Determination | 1.5<br>○ | 1.6<br>○ | 1.6<br>○ | 1.7<br>○ | 1.6<br>○ |
| Light transmittance | 91.4 | 91.3 | 91.3 | 91.1 | 91.2 |
| Brightness x | 0.156 | 0.156 | 0.156 | 0.156 | 0.156 |
| y | 0.162 | 0.161 | 0.162 | 0.161 | 0.162 |
| Y | 15.4 | 15.4 | 15.4 | 15.1 | 15.2 |
| Contrast | 1,800 | 1,700 | 1,700 | 1,700 | 1,800 |
| Coating film smoothness | ○ | ○ | ○ | ○ | ○ |
| Heat resistance ΔY | -0.1 | -0.1 | -0.2 | -0.2 | -0.1 |
| Determination | ○ | ○ | ○ | ○ | ○ |
| | Example 6 | Example 7 | Example 8 | Example 9 | Example 10 |
| Copper phthalocyanine sulfamoyl compound | (S6) | (S7) | (S8) | (S9) | (S10) |
| Blue pigment dispersion | (B6) | (B7) | (B8) | (B9) | (B10) |
| Newtonian flow characteristics γ<br>Determination | 1.5<br>○ | 1.6<br>○ | 1.6<br>○ | 1.5<br>○ | 1.7<br>○ |
| Light transmittance | 91.5 | 90.1 | 90.9 | 91.2 | 91.0 |
| Brightness x<br>y<br>Y | 0.156<br>0.162<br>15.4 | 0.156<br>0.161<br>14.8 | 0.156<br>0.162<br>15.4 | 0.156<br>0.162<br>15.4 | 0.156<br>0.162<br>15.4 |
| Contrast | 1,800 | 1,400 | 1,800 | 1,700 | 1,800 |
| Coating film smoothness | ○ | ○ | ○ | ○ | ○ |
| Heat resistance ΔY<br>Determination | -0.1<br>○ | -0.1<br>○ | -0.1<br>○ | -0.1<br>○ | -0.1<br>○ |
| | Example 11 | Example 12 | Example 13 | Example 14 | Example 15 |
| Copper phthalocyanine sulfamoyl compound | (S11) | (S12) | (S13) | (S14) | (S15) |
| Blue pigment dispersion | (B11) | (B12) | (B 13) | (B 14) | (B 15) |
| Newtonian flow characteristics γ | 1.6 | 1.5 | 1.6 | 1.6 | 1.6 |
| Determination | ○ | ○ | ○ | ○ | ○ |
| Light transmittance | 91.3 | 91.1 | 91.0 | 91.0 | 91.1 |
| Brightness x | 0.156 | 0.156 | 0.156 | 0.156 | 0.156 |

(continued)

| | Example 11 | Example 12 | Example 13 | Example 14 | Example 15 |
|---|---|---|---|---|---|
| y<br>Y | 0.162<br>15.3 | 0.161<br>15.0 | 0.162<br>15.3 | 0.162<br>15.3 | 0.162<br>15.0 |
| Contrast | 1,700 | 1,800 | 1,700 | 1,700 | 1,700 |

[Table 3]

| | Example 16 | Comparative Example 1 | Comparative Example 2 |
|---|---|---|---|
| Copper phthalocyanine sulfamoyl compound | (S16) | None | Copper phthalocyanine sulfonic acid |
| Blue pigment dispersion | (B16) | (b17) | (b18) |
| Newtonian flow characteristics $\gamma$<br>Determination | 1.7<br>○ | Not less than 10<br>× | 2.8<br>× |
| Light transmittance | 91.1 | 88.2 | 90.3 |
| Brightness x<br>y<br>Y | 0.156<br>0.162<br>15.3 | 0.156<br>0.161<br>14.0 | 0.156<br>0.161<br>14.1 |
| Contrast | 1,700 | 900 | 1,800 |
| Coating film smoothness | ○ | × | × |
| Heat resistance $\Delta Y$<br>Determination | -0.1<br>○ | -0.2<br>○ | -0.7<br>× |

It is apparent from the results shown in Tables 2 and 3 that the Newtonian flow characteristics of the blue pigment dispersions using the copper phthalocyanine sulfamoyl compounds (S1) to (S16) obtained in Examples 1 to 16 and represented by general formula (1) were superior to those of the dispersions with no copper phthalocyanine sulfamoyl compound. In addition, the color filters using the compounds (S1) to (S16) were excellent in terms of light transmittance, brightness, contrast, coating film smoothness, and heat resistance compared to the color filter obtained when no copper phthalocyanine sulfamoyl compound was used. Therefore, those using the compounds were useful as the blue pixel portions of color filters.
Moreover, the Newtonian flow characteristics of the blue pigment dispersions using the abovementioned copper phthalocyanine sulfamoyl compounds (S1) to (S16) were superior to those of the dispersion obtained in Comparative Example 2 where copper phthalocyanine sulfonic acid was used. Furthermore, the color filters using the compounds (S1) to (S16) were excellent in terms of coating film smoothness and heat resistance compared to the color filter obtained in Comparative Example 2 where copper phthalocyanine sulfonic acid was used. Therefore, those using the compounds were useful as the blue pixel portions of color filters.

<Evaluation of voltage retention>

Color filters were produced by the following method and evaluation on the voltage retention thereof was made.

(Method for quantifying alkali metals)

Diluted standard solutions were measured for their alkali metal content using an inductively coupled plasma (ICP)-atomic emission spectrometer (Optima 3,300DV manufactured by PerkinElmer Inc.) and a calibration curve was made from the obtained intensity data.
6 ml of 60% nitric acid for atomic absorption spectroscopy was added to 0.25 g of sample and wet acid digestion was conducted using an apparatus for microwave sample digestion (Multiwave 3,000 manufactured by Anton Paar GmbH). This digested sample solution was diluted with ultrapure water where appropriate and the alkali metal content

therein was measured using the ICP spectrometer. The Na concentration in the sample solution was calculated from the previously made calibration curve.

(Method for measuring voltage retention)

Voltage retention was measured by applying a voltage to the samples under the following conditions using a liquid crystal physical property evaluation system 6254 model manufactured by Toyo Corporation.

- Distance between ITO electrodes: 5 to 15 μm
- Pulse amplitude of applied voltage: 5 V
- Pulse frequency of applied voltage: 60 Hz
- Pulse width of applied voltage: 16.67 msec

(Amine value measurement)

Amine values were measured by the following method in accordance with the ASTM D 2074.
a) 0.5 to 2 g of sample was weighed (amount of sample: S g)
b) 30 ml of neutralized ethanol was added to dissolve the sample.
c) Potentiometric titration was carried out on the dissolved solution using a 0.1 mol/L ethanol-hydrochloric acid solution with a titer f (titration amount: A $cm^3$).
Amine values were calculated by the following formula.

$$\text{Amine value} = (A \times f \times 0.2 \times 56.108) \div S$$

(Examples 17 to 22)

10 parts of the copper phthalocyanine sulfamoyl compound obtained in the abovementioned Production Example 1 or Production Example 8 (that is, S1 or S8) was dissolved in 100 parts of toluene and the resulting solution was washed with distilled water using a separatory funnel. The obtained pigment dispersion was then used to produce a color filter in a similar manner to that of the abovementioned Example 1 and the voltage retention thereof was measured. The measurement results are shown in Table 4.
In addition, the measurement results of Comparative Examples 3 and 4 in which the pigment dispersions having sodium contents and amine values shown in Table 4 were used are also shown.
[Table 4]

| | Compound | Washing frequency | Dispersion | Na content (ppm by mass) | Amine value (mgKOH/g) | Voltage retention (%) |
|---|---|---|---|---|---|---|
| Example 17 | S1 | 10 times | B17 | 25 | 0.07 | 97 |
| Example 18 | S1 | 8 times | B18 | 75 | 0.13 | 95 |
| Example 19 | S1 | 5 times | B19 | 90 | 0.14 | 95 |
| Example 20 | S8 | 10 times | B20 | 20 | 0.08 | 97 |
| Example 21 | S8 | 6 times | B21 | 180 | 0.36 | 95 |
| Example 22 | S8 | 5 times | B22 | 280 | 0.40 | 95 |
| Comparative Example 3 | S1 | 3 times | b23 | 375 | 0.47 | 55 |
| Comparative Example 4 | S8 | 3 times | b24 | 345 | 0.47 | 53 |

From the results shown in Table 4, it is apparent that the blue pigment dispersions using the pigment dispersions obtained in Examples 17 to 22 had higher voltage retentions compared to those of the dispersions obtained in Comparative Examples where the pigment dispersions having a sodium content greater than 300 ppm by mass and an amine value greater than 0.4 mgKOH/g were used. Accordingly, the effects of the present invention were verified.

INDUSTRIAL APPLICABILITY

The pigment composition or pigment dispersion obtained by the present invention can be used as the blue pixel portion of a color filter.

**Claims**

1. A pigment composition for color filters comprising:

   a copper phthalocyanine sulfamoyl compound represented by general formula (1)

[Chemical Formula 1]

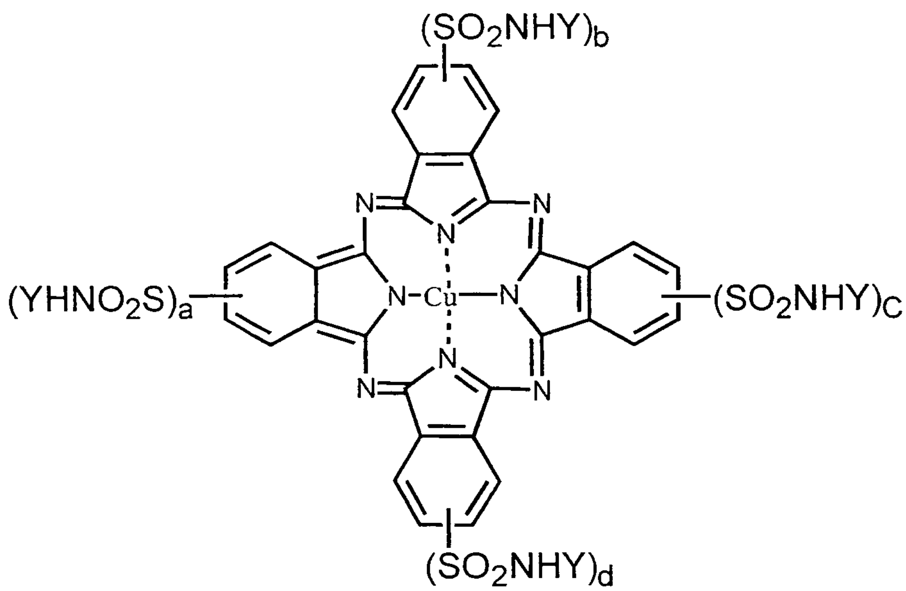

(1)

wherein Y is a moiety represented by general formula (2)

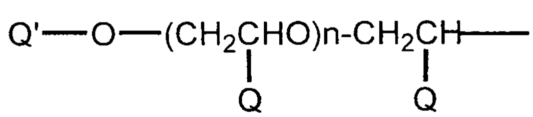

(2)

(wherein n represents an integer of 4 to 100; each Q independently represents a hydrogen atom or a methyl group; and Q' represents a non-cyclic hydrocarbon group of 1 to 30 carbon atoms), a, b, c, and d each independently represents an integer of 0 to 2, although at least one of them is 1; and
a blue organic pigment.

2. The pigment composition for color filters according to Claim 1, wherein a, b, c, and d in the general formula (1) satisfy the following formula: a + b + c + d = 1 to 4.

3. The pigment composition for color filters according to Claim 1, wherein the blue organic pigment is a phthalocyanine

pigment or an indanthrone blue pigment.

4. The pigment composition for color filters according to Claim 3, wherein the phthalocyanine pigment is an ε type copper phthalocyanine.

5. The pigment composition for color filters according to any one of Claims 1 to 4, wherein a mass ratio between the copper phthalocyanine sulfamoyl compound and the blue organic pigment, that is, (copper phthalocyanine sulfamoyl compound) / (blue organic pigment) is 5/95 to 95/5.

6. A pigment dispersion for color filters comprising any one of the pigment compositions for color filters of Claims 1 to 5.

7. The pigment dispersion for color filters according to Claim 6,
wherein a total of alkali metal atoms and alkali earth metal atoms contained in the dispersion is equal to or less than 300 ppm by mass, and also
an amine value of the dispersion is equal to or less than 0.40 mgKOH/g.

8. The pigment dispersion for color filters according to Claim 7, wherein the alkali metal atoms are sodium atoms or potassium atoms.

9. The pigment dispersion for color filters according to Claim 7, wherein the alkali earth metal atoms are magnesium atoms or calcium atoms.

10. A color filter comprising a blue pixel portion,
wherein the blue pixel portion includes any one of the pigment compositions for color filters of Claims 1 to 5 or any one of the pigment dispersions for color filters of Claims 6 to 9.

**INTERNATIONAL SEARCH REPORT**

International application No.
PCT/JP2008/053826

A. CLASSIFICATION OF SUBJECT MATTER
*G02B5/20*(2006.01)i, *C09B67/20*(2006.01)i, *G02B5/22*(2006.01)i

According to International Patent Classification (IPC) or to both national classification and IPC

B. FIELDS SEARCHED

Minimum documentation searched (classification system followed by classification symbols)
G02B5/20, C09B67/20, G02B5/22

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
REGISTRY(STN), CAplus(STN)

C. DOCUMENTS CONSIDERED TO BE RELEVANT

| Category* | Citation of document, with indication, where appropriate, of the relevant passages | Relevant to claim No. |
|---|---|---|
| A | JP 2004-325660 A (Fuji Photo Film Co., Ltd.), 18 November, 2004 (18.11.04), Full text (Family: none) | 1-10 |
| A | JP 2006-83330 A (Konica Minolta Holdings, Inc.), 30 March, 2006 (30.03.06), Full text (Family: none) | 1-10 |
| A | JP 2004-323605 A (Nippon Kayaku Co., Ltd.), 18 November, 2004 (18.11.04), Full text (Family: none) | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
20 May, 2008 (20.05.08)

Date of mailing of the international search report
10 June, 2008 (10.06.08)

Name and mailing address of the ISA/
Japanese Patent Office

Facsimile No.

Authorized officer

Telephone No.

Form PCT/ISA/210 (second sheet) (April 2007)

**INTERNATIONAL SEARCH REPORT**

International application No.
PCT/JP2008/053826

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-176429 A (Fuji Photo Film Co., Ltd.), 24 June, 2003 (24.06.03), Full text (Family: none) | 1-10 |
| A | JP 2004-252443 A (Dainippon Ink And Chemicals, Inc.), 09 September, 2004 (09.09.04), Full text (Family: none) | 1-10 |
| A | JP 2003-3086 A (Fuji Photo Film Co., Ltd.), 08 January, 2003 (08.01.03), Full text & US 2004/0099181 A1 | 1-10 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006052410 A
- JP HEI3149266 B


### Non-patent literature cited in the description


- *Synthesis,* 1981, 1-28
- *Chem. Commun.,* 2003, 2062-2063